# EUROPÄISCHE PATENTANMELDUNG

(11) **EP 2 011 703 A2**
(43) Veröffentlichungstag der Anmeldung: **07.01.2009**
(21) Anmeldenummer: 08104372.1
(22) Anmeldetag: 11.06.2008
(51) Int. Cl.: B60S 1/08, B60S 1/18

(54) **Scheibenwischvorrichtung**

(30) Priorität: 03.07.2007 DE 102007030796
(71) Anmelder: ROBERT BOSCH GMBH, 70442 Stuttgart (DE)
(72) Erfinder: Trenkle, Lothar, 77833, Ottersweier (DE)

(57) **Zusammenfassung**

Die Erfindung betrifft eine Scheibenwischervorrichtung (10) mit einem Scheibenwischerantrieb (11) zum pendelnden Antreiben eines in eine Parklage verstellbaren Wischerarms. Erfindungsgemäß ist vorgesehen, dass Bremsmittel (30) zum reibschlüssigen Festhalten eines Bauteils des Scheibenwischerantriebs (11), insbesondere bei in der Parklage befindlichem Wischerarm (18), vorgesehen sind.

## Beschreibung

### Stand der Technik

Die Erfindung betrifft eine Scheibenwischvorrichtung gemäß dem Oberbegriff des Anspruchs 1.

Es sind Scheibenwischvorrichtungen für Kraftfahrzeuge bekannt, bei denen der Scheibenwischerantrieb ein aufwändiges Kurbelgetriebe zur Erzeugung einer oszillierenden Bewegung des Wischerarms aufweist.

Daneben sind Scheibenwischvorrichtungen bekannt, deren Scheibenwischerantrieb einen sogenannten reversierenden Elektromotor umfasst, dessen Drehrichtung umkehrbar ist, so dass der Wischerarm im Betrieb eine oszillierende Hin- und Herbewegung vollführt. Problematisch bei den bekannten Scheibenwischvorrichtungen mit einem reversierenden Elektromotor ist, dass durch das Wegfallen des Kurbelgetriebes auch die durch das Kurbelgetriebe verursachte Selbsthemmung wegfällt. Dies hat zur Folge, dass Drehmomente, die auf die Abtriebswelle wirken - beispielsweise durch die Anströmung des Wischerarms und des Wischblattes durch den Fahrtwind - an den Elektromotor weitergegeben werden, da das in der Regel zum Einsatz kommende Schneckengetriebe nur eine unzureichende Selbsthemmung aufweist. Da der Elektromotor im Ruhezustand, also bei in einer Parklage befindlichem Wischerarm jedoch nicht bestromt und damit frei drehbar ist, besteht die Gefahr, dass der Wischerarm samt Wischerblatt durch den Fahrtwind in das Wischfeld bewegt wird. Der gleiche Effekt kann in einer Waschstrasse durch die Kraftbeaufschlagung des Wischerarms durch die rotierenden Bürsten auftreten.

Zur Lösung dieses Problems schlägt die DE 193 12 982 A1 vor, Energiespeichermittel vorzusehen, die bei einer Drehung der Abtriebswelle in der einen Drehrichtung Energie aufnehmen und in der anderen Drehrichtung wieder abgeben. Nachteilig bei der bekannten Scheibenwischvorrichtung ist, dass durch das Vorsehen eines Energiespeichers ein Vorteil einer geringen Selbsthemmung, nämlich das Motoren mit geringerer Leistungsaufnahme eingesetzt werden können, zu Nichte gemacht wird, da der Motor den Wischerarm entgegen der von den Energiespeichermitteln erzeugten Gegenkraft verstellen muss.

### Offenbarung der Erfindung

### Technische Aufgabe

Der Erfindung liegt die Aufgabe zugrunde, eine Scheibenwischvorrichtung vorzuschlagen, bei der der Wischerarm in einer gewünschten Position, insbesondere seiner Parklage gesichert ist, ohne dass der Antriebsmotor während des Betriebs eine zusätzliche Gegenkraft überwinden muss.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung den Ansprüchen und/oder den Figuren angegebenen Merkmalen.

Der Erfindung liegt der Gedanke zugrunde, dem Scheibenwischerantrieb Bremsmittel zuzuordnen, die ein, insbesondere drehbares Bauteil des Scheibenwischerantriebs in einer vorgegebenen Position, insbesondere bei in der Parklage befindlichem Wischerarm reibschlüssig arretieren. Bei den Bremsmitteln handelt es sich dabei gemäß der Erfindung um eine Art Feststellbremse. Gegenüber bekannten Scheibenwischvorrichtungen ist von entscheidendem Vorteil, dass die Bremsmittel die Bremskraft nur bei Bedarf, insbesondere nur in einer bestimmten Position des Wischerarms auf mindestens ein Bauteil des Scheibenwischerantriebs aufbringen, so dass der Scheibenwischerantrieb bei gelösten Bremsmitteln ohne zusätzliche Gegenkräfte betreibbar ist. Das Konzept der Erfindung ermöglicht es, den Scheibenwischerantrieb kurbelgetriebefrei auszubilden und somit die Vorteile eines Scheibenwischerantriebs mit einer geringen Selbsthemmung ausnutzen zu können. Insbesondere umfasst der Scheibenwischer einen reversibel betreibbaren Elektromotor zum pendelnden Antreiben einer Abtriebswelle, an der der Wischerarm drehfest festgelegt ist. Dabei kann die Abtriebswelle entweder unmittelbar an der Motorwelle drehfest befestigt oder von der Motorwelle des Elektromotors gebildet sein. Alternativ dazu ist es möglich, zwischen der Motorwelle und der Abtriebswelle ein einfaches Getriebe, insbesondere ein Schneckengetriebe anzuordnen. Eine nach dem Konzept der Erfindung ausgebildete Scheibenwischvorrichtung mit einem kurbelgetriebefreien Scheibenwischerantrieb kann auch in beengten Einbausituationen eingesetzt werden, in denen konventionelle Scheibenwischvorrichtungen mit einem Kurbelgetriebe aus Platzgründen nicht einsetzbar sind. Vorzugsweise weist die Bremsbacke zur Maximierung der Bremskraft einen eine große Haftreibung realisierenden, insbesondere aufgerauten Anlagebelag (Bremsbelag) auf.

In Weiterbildung der Erfindung ist mit Vorteil vorgesehen, dass die Bremsmittel eine erste Bremsbacke umfassen, die aus einer Freigabeposition in eine Bremsposition verstellbar ist, in der sie gegen ein drehbares Bauteil des Scheibenwischerantriebs gepresst ist. Die hierdurch zwischen der Bremsbacke und dem drehbar gelagerten Bauteil des Scheibenwischerantriebs wirkende Haftreibung ist vorzugsweise so groß, dass der Wischerarm auch bei Fahrten mit Höchstgeschwindigkeit sicher in seiner Parklage gehalten wird.

Um ein besonders sicheres Feststellen eines Bauteils des Scheibenwischerantriebs und dem damit verbundenen Unterbinden einer Verstellbewegung des Scheibenwischerantriebs und des daran festgelegten Wischerarms zu gewährleisten, ist es von Vorteil, wenn zusätzlich zu der ersten in eine Bremsposition verstellbaren Bremsbacke mindestens eine zweite Bremsbacke vorgesehen ist. Bevorzugt ist die zweite Bremsbacke derart ausgebildet und angeordnet, dass sie gegen das selbe Bauteil pressbar ist, gegen das auch die erste Bremsbacke pressbar ist. Vorzugsweise ist die zweite Bremsbacke auf einer der ersten Bremsbacke gegenüberliegenden Seite eines drehbaren Bauteils des Scheibenwischerantriebs angeordnet, vorzugsweise derart, dass die erste und die zweite Bremsbacke sich unmittelbar gegenüberliegen und in einer Bremsposition das drehbar gelagerte Bauteil zwischen sich klemmend aufnehmen. Alternativ dazu ist es denkbar, dass die mindestens zwei Bremsbacken reibschlüssig mit unterschiedlichen Bauteilen des Scheibenwischerantriebs zusammenwirken.

Gemäß einer vorteilhaften Ausgestaltung der Erfindung ist vorgesehen, dass die Bremsmittel derart ausgebildet sind, dass sie zum reibschlüssigen Festhalten des mindestens einen Bauteils des Scheibenwischerantriebs nicht bestromt werden müssen, also ohne eine Energieversorgung auskommen. Hierdurch soll gewährleistet werden, dass die Bremsmittel ein reibschlüssiges Festhalten eines Bauteils des Scheibenwischerantriebs zum Arretieren des Scheibenwischerantriebs auch dann sicher ermöglichen, wenn die Scheibenwischvorrichtung gemäß einer Vorgabe des Fahrzeugführers deaktiviert, d.h. der Antriebsmotor nicht bestromt ist.

Bevorzugt weisen die Bremsmittel hierzu mindestens eine Feder auf, mit der die mindestens eine Bremsbacke in Richtung ihrer Bremsposition, in der sie reibschlüssig an dem mindestens einen drehbar gelagerten Bauteil des Scheibenwischerantriebs anliegt, federkraftbeaufschlagt ist. Die Feder sorgt dabei für die notwendige Anpresskraft der mindestens einen Bremsbacke an dem drehbar gelagerten Bauteil des Antriebs. Der Vorteil dieser Ausführungsform besteht darin, dass die Bremsposition eingenommen werden kann, ohne hierfür einen zu bestromenden Antrieb vorsehen zu müssen.

Bevorzugt ist eine Ausführungsform, bei der ein Aktuator, insbesondere ein elektromagnetischer Aktuator vorgesehen ist, mittels dem die mindestens eine Bremsbacke aus ihrer Bremsposition heraus in die Freigabeposition verstellbar ist, in der der Scheibenwischerantrieb reibungsfrei betreibbar ist. Bevorzugt handelt es sich dabei um einen elektromagnetischen Aktuator zum Erzeugen einer Linearbewegung, insbesondere entgegen der Kraft einer Feder, die die mindestens eine Bremsbacke in Richtung ihrer Bremsposition verstellt. Diese Ausführungsform ist von besonderem Vorteil, da nach Unterbrechen der Bestromung des Aktuators die mindestens eine Bremsbacke automatisch in ihre Bremsposition verstellt wird.

In Ausgestaltung der Erfindung ist mit Vorteil vorgesehen, dass das Bauteil, das von den Bremsmitteln reibschlüssig festgehalten wird, ein Zahnrad des Scheibenwischerantriebs ist. Vorzugsweise wirken die Bremsmittel, insbesondere die mindestens eine Bremsbacke in ihrer Bremsposition reibschlüssig mit mindestens einer Stirnseite des Zahnrades zusammen. Dabei umfassen die Bremsmittel mit Vorteil zwei einander gegenüberliegende Bremsbacken, die in ihrer Bremsposition jeweils an einer Stirnseite des Zahnrades anliegen, insbesondere in einem radial äußeren Bereich der Stirnseite zum Vergrößern der Haltekraft (Hebelwirkung). Alternativ ist es denkbar, dass die Bremsmittel beispielsweise mit einer Motorwelle eines elektrischen Antriebsmotors oder mit einer Getriebeschnecke reibschlüssig zusammenwirken.

In Weiterbildung der Erfindung umfasst die Scheibenwischervorrichtung mit Vorteil eine Steuereinrichtung, die derart steuernd auf die Bremsmittel einwirkt, dass diese automatisch aktiviert werden, d.h. das mindestens eine Bauteil reibschlüssig festhalten, sobald der Wischerarm seine Parklage erreicht hat. Beispielsweise kann das Erreichen der Parklage mittels eines Drehmomentsensors auf der Motorwelle des Elektromotors des Scheibenwischerantriebs detektiert werden. Von besonderem Vorteil ist es, dass die Steuereinrichtung die Bremsmittel nur für den Fall aktiviert, wenn die Scheibenwischervorrichtung von einer Bedienperson deaktiviert wurde. Hierdurch wird verhindert, dass die Bremsmittel während des laufenden Betriebs die Scheibenwischervorrichtung arretieren. Die derartig ausgebildete Steuereinrichtung ist insbesondere dann von Vorteil, wenn die Parklage des Wischerarms mit einer unteren Umkehrlage des Wischerarms übereinstimmt.

Wie zu Anfang erwähnt, ermöglicht das Konzept der Erfindung die Realisierung des kurbelgetriebefreien, besonders reibungsarmen Scheibenwischerantriebs. Eine Möglichkeit zur Realisierung eines derartigen Scheibenwischerantriebs besteht darin, dass ein reversibel betreibbarer Elektromotor über ein Schneckengetriebe mit einer Abtriebswelle verbunden ist. Alternativ dazu ist es denkbar, dass die Abtriebswelle unmittelbar von der Motorwelle des Elektromotors gebildet wird.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in;
- Fig. 1:: eine schematische Darstellung einer Scheibenwischvorrichtung auf einer Scheibe eines Kraftfahrzeugs,
- Fig. 2:: eine schematische Darstellung eines Scheibenwischerantriebs mit zwei Bremsbacken umfassenden Bremsmitteln zum reibschlüssigen Festhalten eines Zahnrades und
- Fig. 3:: eine schematische Darstellung eines Scheibenwischerantriebs mit eine Bremsbacke aufweisenden Bremsmitteln zum reibschlüssigen Festhalten eines Zahnrades.

### Ausführungsformen der Erfindung

In den Figuren sind gleiche Bauteile und Bauteile mit der gleichen Funktion mit den gleichen Bezugszeichen gekennzeichnet.

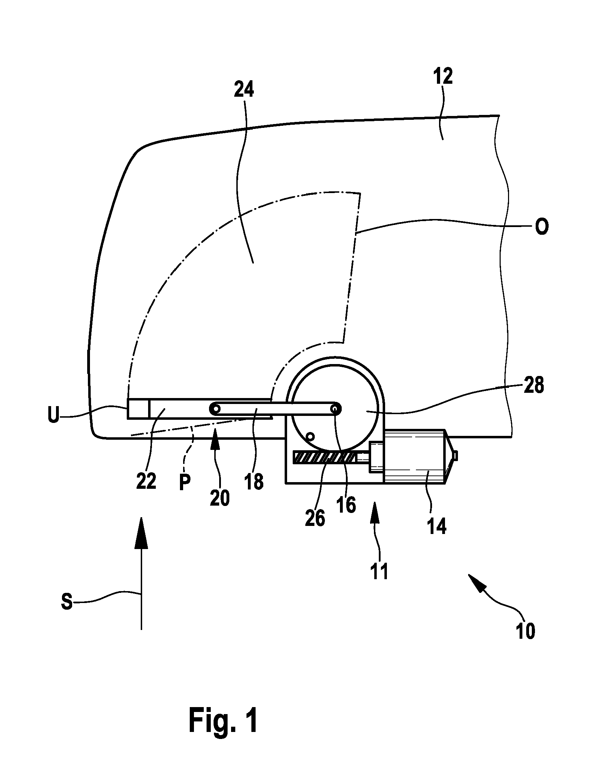

In Fig. 1 ist in einer schematischen Darstellung eine Scheibenwischvorrichtung 10 mit einem Scheibenwischerantrieb 11 an einer Scheibe 12 eines Kraftfahrzeuges dargestellt. Die Scheibe 12 ist hier aus Übersichtsgründen nur zur Hälfte dargestellt. Die Scheibenwischvorrichtung 10, bzw. der Scheibenwischerantrieb 11 umfasst einen reversiblen Elektromotor 14, der eine Abtriebswelle 16 antreibt, mit der drehfest ein Wischerarm 18 verbunden ist. An einem freien Ende 20 des Wischerarms 18 ist ein Wischblatt 22 angelenkt. Im Betrieb vollführt die Abtriebswelle 16 eine pendelnde Bewegung, so dass der Wischerarm 18 sich pendelnd über die Scheibe 12 bewegt. Der vom Wischblatt 22 überstrichene Bereich auf der Scheibe 12 bildet hierbei das Wischfeld 24.

Wie aus Fig. 1 zu entnehmen ist, umfasst der Scheibenwischerantrieb 11 neben dem Elektromotor 14 und der Abtriebswelle 16 eine auf einer Motorwelle sitzende Schnecke 26, die im drehmomentübertragenden Eingriff mit einem Zahnrad 28 ist, das wiederum drehfest mit der Abtriebswelle 16 verbunden ist.

Bei deaktivierter Scheibenwischvorrichtung 10 befindet sich der Wischerarm 18 in einer Parklage P, in die dieser von dem Elektromotor 14 verfahrbar ist. In dem gezeigten Ausführungsbeispiel befindet sich die Parklage P des Wischerarms 18 unterhalb einer unteren Umkehrlage U des Wischerarms. Es ist auch eine Ausführungsform denkbar, bei der die Parklage P mit der unteren Umkehrlage U übereinstimmt.

Während des Betriebs der Scheibenwischvorrichtung pendelt der Wischerarm 18 bei bestromten Elektromotor 14 zwischen der unteren Umkehrlage U und einer oberen Umkehrlage O.

Fährt das Kraftfahrzeug, so wirkt der Fahrtwind auf den Wischerarm 18 und drückt ihn - aufgrund der Neigung der Scheibe 12 - nach oben. Diese Luftströmung ist durch den Strömungspfeil S symbolisiert. Dadurch wirkt auf die Abtriebswelle 16 ein Drehmoment. Ist der Elektromotor 14 nicht bestromt, so würde der Wischerarm 18 aus seiner Parklage P nach oben in das Wischfeld 24 wandern, für den Fall, dass keine im folgenden noch zu erläuternden Bremsmittel zum Festhalten eines drehbar gelagerten Bauteils des Scheibenwischerantriebs 11 vorgesehen wären.

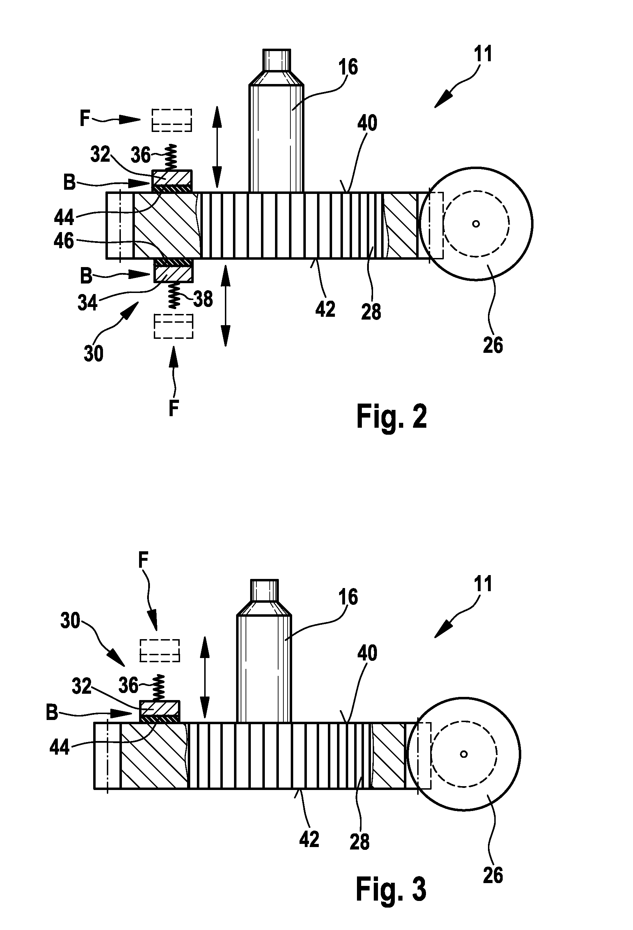

In Fig. 2 ist ein Ausschnitt einer möglichen Ausführung eines Scheibenwischerantriebs 11 einer Scheibenwischvorrichtung 10 gezeigt. Zu erkennen ist eine elektromotorisch, reversierend angetriebene Schnecke 26, die in Eingriff mit einem Zahnrad 28 ist, das in diesem Ausführungsbeispiel einstückig mit der Abtriebswelle 16 verbunden ist, an der im montierten Zustand der Wischerarm 18 (vgl. Fig. 1) festgelegt ist.

Die Scheibenwischvorrichtung 10 umfasst Bremsmittel 30, mit denen das Zahnrad 28 bei in der Parklage P befindlichem Wischerarm 18 (vgl. Fig. 1) reibschlüssig festgehalten wird, wodurch eine Drehbewegung des Zahnrades 28 und damit der Abtriebswelle 16 unterbunden wird. Hierdurch kann verhindert werden, dass ein drehfest mit der Abtriebswelle 16 verbundener Wischerarm 18 durch äußere Krafteinflüsse, wie Windkräfte oder eine Kraftbeaufschlagung durch rotierende Bürsten in einer Waschanlage ungewollt aus seiner Parklage heraus in das Wischfeld 24 (vgl. Fig. 1) bewegt wird.

Die als Feststellbremse ausgebildeten Bremsmittel 30 umfassen in dem Ausführungsbeispiel gemäß Fig. 2 eine erste Bremsbacke 32 und eine dieser gegenüberliegenden zweite Bremsbacke 34, die jeweils zwischen einer Bremsposition B und einer Freigabeposition F linear verstellbar sind. In der Bremsposition B sind die Bremsbacken 32, 34 jeweils mittels einer Feder 36, 38 gegen jeweils eine Stirnseite 40, 42 des Zahnrades 28 gepresst und liegen reibschlüssig an diesem an. Zur Erhöhung der Haftreibung weisen beide Bremsbacken 32, 34 jeweils einen Reibbelag 44, 46 auf.

Wie aus Fig. 1 ersichtlich ist, liegen die beiden Bremsbacken 32, 34 einander unmittelbar gegenüber. Jeder Bremsbacke 32, 34 ist ein nicht gezeigter, elektromagnetischer Aktuator zugeordnet, mittels dessen die Bremsbacken 32, 34 entgegen der Federkraft der Federn 36, 38 aus ihrer Bremsposition B in die Freigabeposition F verstellbar sind, in der das Zahnrad 28 und somit der Wischerarm 18 frei verdrehbar ist.

In Fig. 3 ist ein alternatives Ausführungsbeispiel der Bremsmittel 30 gezeigt. Die Bremsmittel 30 gemäß Fig. 3 umfassen lediglich eine einzige erste Bremsbacke 32 mit einem Bremsbelag 34, der mit der Stirnseite 40 des Zahnrades 28 in der Bremsposition B zusammenwirkt. Die erste Bremsbacke 32 der Bremsmittel 30 gemäß Fig. 3 ist ebenfalls mittels eines elektromagnetischen Aktuators in einer Linearbewegung entgegen der Federkraft der Feder 36 aus der Bremsposition B in die Freigabeposition F verstellbar.

Den Bremsmitteln 30 bzw. dem nicht gezeigten Aktuator der Bremsbacke 32 sind eine nicht gezeigte Steuereinrichtung zugeordnet, die die Bestromung des Aktuators unterbricht, sobald sich der Wischerarm in seiner Parklage befindet und die Scheibenwischvorrichtung 10 von einer Bedienperson deaktiviert wurde. Nach Unterbrechen der Bestromung des Aktuators entfällt die auf die Bremsbacke 32 wirkende Haltekraft zum Halten der Bremsbacke 32 in ihrer Freigabeposition F, so dass die Bremsbacke 32 aufgrund der Federkraft der Feder 36 gegen die Stirnseite 40 des Zahnrades 28 gepresst wird und damit den gesamten Scheibenwischerantrieb 11 reibschlüssig blockiert.

## Patentansprüche

1. Scheibenwischvorrichtung mit einem Scheibenwischerantrieb (11) zum pendelnden Antreiben eines in eine Parklage verstellbaren Wischerarms (18),
**dadurch gekennzeichnet,**
**dass** Bremsmittel (30) zum reibschlüssigen Festhalten eines Bauteils des Scheibenwischerantriebs (11), insbesondere bei in der Parklage (P) befindlichem Wischerarm (18), vorgesehen sind.

2. Scheibenwischvorrichtung nach Anspruch 1,
**dadurch gekennzeichnet,**
**dass** die Bremsmittel (30) eine erste Bremsbacke (32) umfassen, die aus einer Freigabeposition (F) in eine Bremsposition (B) verstellbar ist, in der sie gegen ein drehbares Bauteil des Scheibenwischerantriebs (11) gepresst ist.

3. Scheibenwischvorrichtung nach Anspruch 2,
**dadurch gekennzeichnet,**
**dass** die Bremsmittel (30) mindestens eine zweite Bremsbacke (34) umfassen, die aus einer Freigabeposition (F) in eine Bremsposition (B) verstellbar ist, in der sie gegen ein drehbares Bauteil des Scheibenwischerantriebs (11), insbesondere auf einer der ersten Bremsbacke (32) abgewandten Seite des Bauteils, vorzugsweise in einer der ersten Bremsbacke (32) gegenüberliegenden Position, gepresst ist.

4. Scheibenwischvorrichtung nach einem der vorhergehenden Ansprüche,
**dadurch gekennzeichnet,**
**dass** die Bremsmittel (30) das Bauteil ohne Bestromung festhaltend ausgebildet sind.

5. Scheibenwischvorrichtung nach einem der Ansprüche 2 bis 4,
**dadurch gekennzeichnet,**
**dass** die erste und/oder die zweite Bremsbacke (34), vorzugsweise ausschließlich, mittels mindestens einer Feder (36, 38) aus der Freigabeposition (F) in die Bremsposition (B) verstellbar sind/ist.

6. Scheibenwischvorrichtung nach einem der Ansprüche 2 bis 6,
**dadurch gekennzeichnet,**
**dass** die erste und/oder die zweite Bremsbacke (32, 34) mit mindestens einem, insbesondere elektromagnetischen, Aktuator aus der Bremsposition (B) in die Freigabeposition (F) verstellbar sind/ist.

7. Scheibenwischvorrichtung nach einem der vorhergehenden Ansprüche,
**dadurch gekennzeichnet,**
**dass** das von den Bremsmitteln (30) festgehaltene Bauteil ein Zahnrad (28) des Scheibenwischerantriebs (11) ist.

8. Scheibenwischervorrichtung nach Anspruch 7,
**dadurch gekennzeichnet,**
**dass** die Bremsmittel (30) reibschlüssig mit mindestens einer Stirnseite (40, 42) des Zahnrades (28) zusammenwirkend ausgebildet und/oder angeordnet sind.

9. Scheibenwischervorrichtung nach einem der vorhergehenden Ansprüche,
**dadurch gekennzeichnet,**
**dass** eine Steuereinrichtung vorgesehen ist, die derart ausgebildet ist, dass sie die Bremsmittel (30) automatisch aktiviert, sobald der Wischerarm (18) seine Parklage (P) erreicht hat und vorzugsweise nur dann, wenn gleichzeitig die Scheibenwischervorrichtung (10) von einer Bedienperson deaktiviert wurde.

10. Scheibenwischervorrichtung nach einem der vorhergehenden Ansprüche,
**dadurch gekennzeichnet,**
**dass** die Scheibenwischervorrichtung (10) einen reversibel betreibbaren Elektromotor (14) zum pendelnden Antreiben einer Abtriebswelle (16), insbesondere über ein zwischengeschaltetes Schneckengetriebe, umfasst.
